# EUROPÄISCHE PATENTANMELDUNG

(11) **EP 3 261 062 A1**
(43) Veröffentlichungstag der Anmeldung: **27.12.2017**
(21) Anmeldenummer: 16176210.9
(22) Anmeldetag: 24.06.2016
(51) Int. Cl.: G07C 9/00, G07B 15/04

(54) **VERFAHREN UND SYSTEM ZUR ZUGANGSKONTROLLE**

(71) Anmelder: SKIDATA AG, 5083 Grödig/Salzburg (AT)
(72) Erfinder: Danzl, Helmut, 5322 Hof bei Salzburg (AT)
(74) Vertreter: Karakatsanis, Georgios

(57) **Zusammenfassung**

Es wird ein Verfahren zur Zugangskontrolle bei einem Zugangskontrollsystem für Fahrzeuge umfassend zumindest eine Zugangskontrollvorrichtung vorgeschlagen, im Rahmen dessen mittels einer einem in Zugangsrichtung ankommenden Fahrzeug zugewandten Anzeigevorrichtung der zumindest einen Zugangskontrollvorrichtung ein eindeutiger, der jeweiligen Zugangskontrollvorrichtung zugeordneter Text angezeigt wird, der durch die Ausführung und/oder Anordnung der Anzeigevorrichtung nur in einem definierten Bereich um die Zugangskontrollvorrichtung sichtbar ist, in dem sich unter normalen Betriebsbedingungen nur ein Fahrzeug befinden kann, wobei der angezeigte Text verwendet wird, um die Zugangskontrollvorrichtung in Abhängigkeit von einem mobilen elektronischen Gerät (1), in das der Text von einem Benutzer diktiert wird, an das Zugangskontrollsystem übermittelten Daten zu steuern.

## Beschreibung

Die vorliegende Erfindung bezieht sich auf ein Verfahren zur Zugangskontrolle bei einem Zugangskontrollsystem für Fahrzeuge umfassend zumindest eine Zugangskontrollvorrichtung gemäß dem Oberbegriff des Patentanspruchs 1. Ferner bezieht sich die Erfindung auf ein Zugangskontrollsystem für Fahrzeuge umfassend zumindest eine Zugangskontrollvorrichtung, insbesondere auf ein Zugangskontrollsystem zur Durchführung des erfindungsgemäßen Verfahrens.

Aus dem Stand der Technik sind Verfahren und Systeme zur Zugangskontrolle für Fahrzeuge bekannt. Hierbei ist in der Regel vorgesehen, eine Zugangskontrolle mittels des Auslesens von Zugangsberechtigungen durchzuführen, wobei Zugangskontrollvorrichtungen vorgesehen sind, die Mittel zum Erfassen und Auswerten der Zugangsberechtigungen sowie mechanische oder sonstig ausgeführte Sperrorgane aufweisen, die nach Vorliegen einer gültigen Zugangsberechtigung automatisch oder manuell von einer Sperrstellung in eine Freistellung überführt werden.

Der vorliegenden Erfindung liegt die Aufgabe zugrunde, ein Verfahren zur Zugangskontrolle bei einem Zugangskontrollsystem für Fahrzeuge umfassend zumindest eine Zugangskontrollvorrichtung anzugeben, durch dessen Durchführung die Zugangskontrolle vereinfacht wird. Ferner soll ein Zugangskontrollsystem für Fahrzeuge umfassend zumindest eine Zugangskontrollvorrichtung, insbesondere ein Zugangskontrollsystem zur Durchführung des erfindungsgemäßen Verfahrens angegeben werden.

Diese Aufgabe wird für ein Verfahren durch die Merkmale des Patentanspruchs 1 gelöst. Ein Zugangskontrollsystem für Personen oder Fahrzeuge ist Gegenstand des Patentanspruchs 9. Weitere erfindungsgemäße Ausgestaltungen und Vorteile gehen aus den entsprechenden Unteransprüchen hervor.

Demnach wird ein Verfahren zur Zugangskontrolle bei einem Zugangskontrollsystem für Fahrzeuge umfassend zumindest eine Zugangskontrollvorrichtung vorgeschlagen, im Rahmen dessen mittels einer einem in Zugangsrichtung ankommenden Fahrzeug zugewandten Anzeigevorrichtung der zumindest einen Zugangskontrollvorrichtung ein eindeutiger, der jeweiligen Zugangskontrollvorrichtung zugeordneter Text angezeigt wird, der durch die Ausführung und /oder Anordnung der Anzeigevorrichtung nur in einem definierten Bereich um die Zugangskontrollvorrichtung sichtbar bzw. lesbar ist, in dem sich unter normalen Betriebsbedingungen nur ein Fahrzeug befinden kann, wobei der angezeigte Text verwendet wird, um die Zugangskontrollvorrichtung in Abhängigkeit von von einem mobilen elektronischen Gerät, in das der Text von einem Benutzer diktiert wird, an das Zugangskontrollsystem übermittelten Daten zu steuern.

Der von der Anzeigevorrichtung angezeigte Text kann in vorgegebenen zeitlichen Abständen geändert werden. Ferner kann der Text permanent, in vorgegebenen periodischen Abständen oder nach Detektion eines Fahrzeugs mittels eines geeigneten, aus dem Stand der Technik bekannten Sensors angezeigt werden.

Da der von einer einer Zugangskontrollvorrichtung zugeordneten Anzeigevorrichtung angezeigte Text nur in einem definierten Bereich um die Zugangskontrollvorrichtung sichtbar bzw. lesbar ist, in dem sich unter normalen Betriebsbedingungen nur ein Fahrzeug befinden kann, wird der Text in das mobile elektronische Gerät diktiert, wenn sich der Benutzer des mobilen elektronischen Gerätes bzw. die Person, die es bei sich trägt, in einem Fahrzeug in der Zugangsspur direkt vor dem Übergang zwischen dem vom Zugangskontrollsystem abgedeckten Gebiet und dem nicht vom Zugangskontrollsystem abgedeckten Gebiet befindet. Eine Zugangskontrollvorrichtung im Sinne der Erfindung kann einer Einfahrt oder einer Ausfahrt zugeordnet sein, wobei an der Ausfahrt überprüft wird, ob die Gebühr für den Aufenthalt in dem vom Zugangskontrollsystem abgedeckten Gebiet entrichtet worden ist. Die Zugangskontrollvorrichtungen sind mit einem Server datentechnisch verbunden.

Gemäß einer Ausgestaltung der Erfindung wird, wenn sich ein Fahrzeug in Zugangsrichtung im definierten Bereich befindet, in dem der Text sichtbar ist, der Text von einem Fahrzeuginsassen in ein mobiles elektronisches Gerät diktiert, wobei der diktierte Text von einer Software im mobilen elektronischen Gerät, beispielsweise von einer App, zu einem Text transkribiert wird, und wobei über einen geeigneten Kommunikationskanal, beispielsweise mittels WLAN, Bluetooth Low Energy (BLE) oder Mobilfunk vorzugsweise über die App, die der Transkription des diktierten Textes dient, an einen Server des Zugangskontrollsystems Informationen übermittelt werden, welche den transkribierten Text und Identifikationsdaten des Benutzers, der das mobile elektronische Gerät bei sich trägt, umfassend zumindest eine eindeutige ID des Benutzers oder des mobilen elektronischen Gerätes, enthalten, wobei ein Sperrorgan der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes ausgelesen oder über eine Software im mobilen elektronischen Gerät, beispielsweise über die der Transkription dienenden App an das Zugangskontrollsystem übermittelt wird.

Alternativ zu der Transkription des diktierten Textes von einer Software im mobilen elektronischen Gerät können der diktierte Text, d.h. die entsprechende Audio-Datei und Identifikationsdaten des Benutzers, der das mobile elektronische Gerät bei sich trägt, umfassend zumindest eine eindeutige ID des Benutzers oder des mobilen elektronischen Gerätes, über einen geeigneten Kommunikationskanal, beispielsweise mittels WLAN, Bluetooth Low Energy (BLE) oder Mobilfunk und eine Software im mobilen elektronischen Gerät, vorzugsweise über eine App, an einen Server des Zugangskontrollsystems übermittelt werden, wobei im Server der diktierte Text zu einem Text transkribiert wird und ein Sperrorgan der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes ausgelesen oder über eine Software im mobilen elektronischen Gerät, beispielsweise über die App an das Zugangskontrollsystem übermittelt wird.

Im Rahmen einer Ausgestaltung der Erfindung kann die App über einen vorgegebenen Sprachbefehl aktiviert werden. Zur Realisierung des Kommunikationskanals sind dem Fachmann bestens bekannte Vorrichtungen vorgesehen; beispielsweise sind für den Fall, dass der Kommunikationskanal auf dem BLE-Standard basiert, BLE-Sende- /Empfangseinheiten vorgesehen, die mit einem Server des Zugangskontrollsystems datentechnisch verbunden sind.

Anhand des an den Server übermittelten oder des im Server transkribierten Textes, der einer Zugangskontrollvorrichtung zugeordnet ist, wird die Zugangskontrollvorrichtung identifiziert, in deren Zugangsspur sich der Benutzer des mobilen elektronischen Gerätes bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet.

Wenn der Benutzer kein registrierter Benutzer ist, kann er über sich über die App registrieren und ein Kundenkonto eröffnen, welches optional Kreditkartendaten enthalten kann.

Im Rahmen einer weiteren Ausgestaltung der Erfindung wird über den Kommunikationskanal, über den Identifikationsdaten des Benutzers und der transkribierte Text oder der diktierte Text, d.h. die entsprechende Audio-Datei zur Transkription an den Server übermittelt werden, vom Server an das mobile elektronische Gerät ein elektronisches Ticket übermittelt, wobei die erforderlichen Gebühren vor dem Ausfahren mittels einer Software im mobilen elektronischen Gerät, beispielsweise über die der Transkription oder der Übermittlung der Audio-Datei dienenden App und Kreditkartendaten oder an geeigneten Automaten entrichtet werden, wobei im Rahmen des Bezahlvorgangs die ID des Benutzers oder des mobilen elektronischen Gerätes an den Server übermittelt werden. Beispielsweise kann das elektronische Ticket einen Barcode enthalten, der zum Entrichten der Gebühren von einem Bezahlautomaten aufweisend einen Barcodescanner eingelesen wird. Beim Ausfahren wird anhand der ID des Benutzers oder des mobilen elektronischen Gerätes festgestellt, ob die Gebühren entrichtet worden sind, wobei wenn dies der Fall ist, ein Sperrorgan der Zugangskontrollvorrichtung, der der transkribierte Text zugeordnet ist, im Öffnungssinne betätigt wird.

Gemäß der Erfindung wird ein Zugangskontrollsystem für Fahrzeuge umfassend zumindest eine Zugangskontrollvorrichtung vorgeschlagen, bei dem die zumindest eine Zugangskontrollvorrichtung eine den ankommenden Fahrzeugen zugewandte Anzeigevorrichtung aufweist, mittels der ein eindeutiger, der jeweiligen Zugangskontrollvorrichtung zugeordneter Text anzeigbar ist, der durch die Ausführung und /oder Anordnung der Anzeigevorrichtung nur in einem definierten Bereich um die Zugangskontrollvorrichtung sichtbar ist, in dem sich unter normalen Betriebsbedingungen nur ein Fahrzeug befinden kann.

Die zumindest eine Zugangskontrollvorrichtung weist beispielsweise nach dem Stand der Technik eine Parksäule und einen Schrankenbaum auf; die Anzeigevorrichtung kann erfindungsgemäß am Schrankenbaum oder an der Parksäule angebracht oder in den Schrankenbaum oder in die Parksäule integriert sein. Ferner kann als Anzeigevorrichtung eine bereits vorhandene Anzeigevorrichtung verwendet werden.

Hierbei können gemäß einer Weiterbildung der Erfindung die Seiten des Schrankenbaums oder der Parksäule, die ankommenden Fahrzeugen in Abhängigkeit der Zugangsrichtung zugewandt sein können, jeweils eine Anzeigevorrichtung aufweisen, wobei anhand der Signale eines Sensors, beispielsweise einer Induktionsschleife erkannt wird, an welcher Seite der Zugangskontrollvorrichtung sich ein Fahrzeug befindet, um die Anzeigevorrichtung dieser Seite zu aktivieren. Gemäß einer Weiterbildung der Erfindung kann die Anzeigevorrichtung mehrere LEDs aufweisen, die in Abhängigkeit der Aktivierung einzelner LEDs den anzuzeigenden Text darstellen.

Im Rahmen einer Weiterbildung der Erfindung können zusätzlich zum transkribierten Text und zu den Identifikationsdaten des Benutzers mittels des Kommunikationskanals auch die GPS-Koordinaten des mobilen elektronischen Gerätes an den Server übermittelt werden, wodurch die Identifizierung der Zugangskontrollvorrichtung vereinfacht wird; da die Zugangskontrollvorrichtung in diesem Fall anhand der Kombination aus GPS-Daten und dem transkribierten Text, d.h. der Zuordnung des Textes zu einer Zugangskontrollvorrichtung identifiziert wird, kann der angezeigte Text sehr kurz, beispielsweise einsilbig sein, was die Transkriptionsgeschwindigkeit erhöht und zudem in einer Minimierung von Transkriptionsfehlern resultiert.

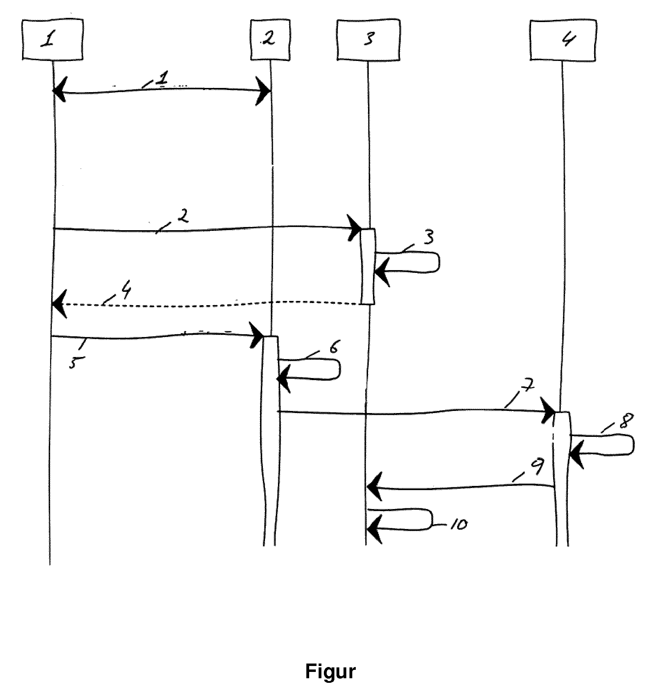

Die Erfindung wird im Folgenden anhand der beigefügten Figur, welche ein Flussdiagramm zur Veranschaulichung des erfindungsgemäßen Verfahrens darstellt, beispielhaft näher erläutert.

In der beigefügten Figur ist mit 1 ein mobiles elektronisches Gerät bezeichnet, wobei 2 eine im mobilen elektronischen Gerät 1 installierte App, 3 einen Schrankenbaum einer Zugangskontrollvorrichtung und 4 einen Server eines Zugangskontrollsystems für Fahrzeuge darstellen.

Erfindungsgemäß wird mittels einer einem in Zugangsrichtung ankommenden Fahrzeug zugewandten Anzeigevorrichtung der zumindest einen Zugangskontrollvorrichtung eines Zugangskontrollsystems ein eindeutiger, der jeweiligen Zugangskontrollvorrichtung zugeordneter Text angezeigt, der durch die Ausführung und /oder Anordnung der Anzeigevorrichtung nur in einem definierten Bereich um die Zugangskontrollvorrichtung sichtbar ist, in dem sich unter normalen Betriebsbedingungen nur ein Fahrzeug befinden kann, wobei der angezeigte Text verwendet wird, um die Zugangskontrollvorrichtung in Abhängigkeit von von einem mobilen elektronischen Gerät 1, in das der Text von einem Benutzer diktiert wird, an das Zugangskontrollsystem übermittelten Daten zu steuern.

Bei dem in der Figur gezeigten Beispiel wird, ist auf einem mobilen elektronischen Gerät 1 der Fahrzeuginsassen eines Fahrzeugs eine App 2 installiert, (Schritt 1). Wenn das Fahrzeug sich im definierten Bereich, in dem ein von der Anzeigevorrichtung angezeigte Text sichtbar ist, was beispielsweise mittels einer Induktionsschleife oder eines Radarsensors erkannt wird (Schritt 2), wird mittels einer am Schrankenbaum 3 der Zugangskontrollvorrichtung angebrachten oder in den Schrankenbaum 3 integrierten Anzeigevorrichtung ein dieser Zugangskontrollvorrichtung zugeordneter Text angezeigt (Schritt 3), der von einem Fahrzeuginsassen gelesen wird (Schritt 4). Anschließend werden die App 2 aktiviert, was vorzugsweise durch einen Sprachbefehl erfolgt, und der Text vom Benutzer in das mobil elektronische Gerät 1 diktiert (Schritt 5). Gemäß der Erfindung wird der diktierte Text mittels der App 2 zu einem Text transkribiert (Schritt 6) und über einen geeigneten Kommunikationskanal, beispielsweise mittels WLAN, Bluetooth Low Energy (BLE) oder Mobilfunk über die App 2 an einen Server 4 des Zugangskontrollsystems zusammen mit Identifikationsdaten des Benutzers, umfassend zumindest eine eindeutige ID des Benutzers oder des mobilen elektronischen Gerätes 1 übermittelt (Schritt 7).

Im Server 4 wird anhand des übermittelten transkribierten Textes die Zugangskontrollvorrichtung identifiziert, in deren Zugangsspur sich der Benutzer des mobilen elektronischen Gerätes 1 in einem Fahrzeug direkt vor dem Übergang zwischen dem vom Zugangskontrollsystem abgedeckten Gebiet und dem nicht vom Zugangskontrollsystem abgedeckten Gebiet befindet. Ferner werden die Identifikationsdaten des Benutzers ausgewertet (Schritt 8), wobei der Schrankenbaum 3 der identifizierten Zugangskontrollvorrichtung anhand eines vom Server 4 an die Zugangskontrollvorrichtung übermittelten Befehls (Schritt 9) im Öffnungssinne betätigt wird (Schritt 10), wenn beim Betreten des vom Zugangskontrollsystem abgedeckten Gebiets anhand der ID des Benutzers oder des mobilen elektronischen Gerätes 1 der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes 1 ausgelesen oder über eine App an das Zugangskontrollsystem übermittelt wird.

## Patentansprüche

1. Verfahren zur Zugangskontrolle bei einem Zugangskontrollsystem für Fahrzeuge umfassend zumindest eine Zugangskontrollvorrichtung, **dadurch gekennzeichnet, dass** mittels einer einem in Zugangsrichtung ankommenden Fahrzeug zugewandten Anzeigevorrichtung der zumindest einen Zugangskontrollvorrichtung ein eindeutiger, der jeweiligen Zugangskontrollvorrichtung zugeordneter Text angezeigt wird, der durch die Ausführung und/oder Anordnung der Anzeigevorrichtung nur in einem definierten Bereich um die Zugangskontrollvorrichtung sichtbar ist, in dem sich unter normalen Betriebsbedingungen nur ein Fahrzeug befinden kann, wobei der angezeigte Text verwendet wird, um die Zugangskontrollvorrichtung in Abhängigkeit von von einem mobilen elektronischen Gerät (1), in das der Text von einem Benutzer diktiert wird, an das Zugangskontrollsystem übermittelten Daten zu steuern.

2. Verfahren zur Zugangskontrolle nach Anspruch 1, **dadurch gekennzeichnet, dass** der von der Anzeigevorrichtung angezeigte Text in vorgegebenen zeitlichen Abständen geändert wird.

3. Verfahren zur Zugangskontrolle nach Anspruch 1 oder 2, **dadurch gekennzeichnet, dass** von der Anzeigevorrichtung angezeigte Text permanent, in vorgegebenen periodischen Abständen oder nach Detektion eines Fahrzeugs angezeigt wird.

4. Verfahren zur Zugangskontrolle nach Anspruch 1, 2 oder 3, **dadurch gekennzeichnet, dass** der diktierte Text von einer Software im mobilen elektronischen Gerät (1) zu einem Text transkribiert wird, wobei über einen Kommunikationskanal an einen Server (4) des Zugangskontrollsystems Informationen übermittelt werden, welche den transkribierten Text und Identifikationsdaten des Benutzers, umfassend zumindest eine eindeutige ID des Benutzers oder des mobilen elektronischen Gerätes (1), enthalten, wobei anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei ein Sperrorgan (3) der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes (1) der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes (1) ausgelesen oder über eine Software im mobilen elektronischen Gerät (1) an das Zugangskontrollsystem übermittelt wird.

5. Verfahren zur Zugangskontrolle nach Anspruch 1, 2 oder 3, **dadurch gekennzeichnet, dass** der diktierte Text von einer Software im mobilen elektronischen Gerät (1) zu einem Text transkribiert wird, wobei über einen Kommunikationskanal an einen Server (4) des Zugangskontrollsystems Informationen übermittelt werden, welche den transkribierten Text und Identifikationsdaten des Benutzers, umfassend zumindest eine eindeutige ID des Benutzers oder des mobilen elektronischen Gerätes (1), enthalten, wobei anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei beim Einfahren in das vom Zugangskontrollsystem abgedeckte Gebiet anschließend über den Kommunikationskanal vom Server (4) an das mobile elektronische Gerät (1) ein elektronisches Ticket übermittelt wird und ein Sperrorgan (3) der Zugangskontrollvorrichtung, der der transkribierte Text zugeordnet ist, im Öffnungssinne betätigt wird, wobei die Gebühren vor dem Ausfahren mittels einer Software im mobilen elektronischen Gerät und Kreditkartendaten oder an geeigneten Automaten entrichtet werden, wobei im Rahmen des Bezahlvorgangs die ID des Benutzers oder des mobilen elektronischen Gerätes (1) an den Server (4) übermittelt werden, wobei beim Ausfahren anhand der ID des Benutzers oder des mobilen elektronischen Gerätes (1) festgestellt wird, ob die Gebühren entrichtet worden sind, wobei wenn dies der Fall ist, ein Sperrorgan (3) der Zugangskontrollvorrichtung, der der transkribierte Text zugeordnet ist, im Öffnungssinne betätigt wird.

6. Verfahren zur Zugangskontrolle nach Anspruch 1, 2 oder 3, **dadurch gekennzeichnet, dass** die dem diktierten Text entsprechende Audio-Datei und Identifikationsdaten des Benutzers, der das mobile elektronische Gerät (1) bei sich trägt, umfassend zumindest eine eindeutige ID des Benutzers oder des mobilen elektronischen Gerätes (1), über einen Kommunikationskanal und eine Software im mobilen elektronischen Gerät (1) an einen Server (4) des Zugangskontrollsystems übermittelt werden, wobei im Server (4) der diktierte Text zu einem Text transkribiert wird und anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, und ein Sperrorgan (3) der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes (1) der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes ausgelesen oder über eine Software im mobilen elektronischen Gerät (1), an das Zugangskontrollsystem übermittelt wird.

7. Verfahren zur Zugangskontrolle nach Anspruch 1, 2 oder 3, **dadurch gekennzeichnet, dass** die dem diktierten Text entsprechende Audio-Datei und Identifikationsdaten des Benutzers, der das mobile elektronische Gerät (1) bei sich trägt, umfassend zumindest eine eindeutige ID des Benutzers oder des mobilen elektronischen Gerätes (1), über einen Kommunikationskanal und eine Software im mobilen elektronischen Gerät (1) an einen Server (4) des Zugangskontrollsystems übermittelt werden, wobei im Server (4) der diktierte Text zu einem Text transkribiert wird und anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei beim Einfahren in das vom Zugangskontrollsystem abgedeckte Gebiet anschließend über den Kommunikationskanal vom Server (4) an das mobile elektronische Gerät (1) ein elektronisches Ticket übermittelt wird und ein Sperrorgan (3) der Zugangskontrollvorrichtung, der der transkribierte Text zugeordnet ist, im Öffnungssinne betätigt wird, wobei die Gebühren vor dem Ausfahren mittels einer Software im mobilen elektronischen Gerät und Kreditkartendaten oder an geeigneten Automaten entrichtet werden, wobei im Rahmen des Bezahlvorgangs die ID des Benutzers oder des mobilen elektronischen Gerätes (1) an den Server (4) übermittelt werden, wobei beim Ausfahren anhand der ID des Benutzers oder des mobilen elektronischen Gerätes (1) festgestellt wird, ob die Gebühren entrichtet worden sind, wobei wenn dies der Fall ist, ein Sperrorgan (3) der Zugangskontrollvorrichtung, der der transkribierte Text zugeordnet ist, im Öffnungssinne betätigt wird.

8. Verfahren zur Zugangskontrolle nach Anspruch 4, 5, 6 oder 7, **dadurch gekennzeichnet, dass** mittels des Kommunikationskanals zusätzlich zum transkribierten Text und den Identifikationsdaten des Benutzers auch die GPS-Koordinaten des mobilen elektronischen Gerätes (1) an den Server (4) übermittelt werden, wobei eine Zugangskontrollvorrichtung anhand der Kombination aus GPS-Daten und dem transkribierten Text identifiziert wird.

9. Zugangskontrollsystem für Fahrzeuge umfassend zumindest eine Zugangskontrollvorrichtung, insbesondere zur Durchführung des Verfahrens nach einem der vorangehenden Ansprüche, **dadurch gekennzeichnet, dass** die zumindest eine Zugangskontrollvorrichtung eine den ankommenden Fahrzeugen zugewandte Anzeigevorrichtung aufweist, mittels der ein eindeutiger, der jeweiligen Zugangskontrollvorrichtung zugeordneter Text anzeigbar ist, der durch die Ausführung und/oder Anordnung der Anzeigevorrichtung nur in einem definierten Bereich um die Zugangskontrollvorrichtung sichtbar ist, in dem sich nur ein Fahrzeug befinden kann, wobei der angezeigte Text verwendbar ist, um die Zugangskontrollvorrichtung in Abhängigkeit von von einem mobilen elektronischen Gerät (1), in das der Text von einem Benutzer diktiert wird, an das Zugangskontrollsystem übermittelten Daten zu steuern.

10. Zugangskontrollsystem für Fahrzeuge nach Anspruch 9, **dadurch gekennzeichnet, dass** die zumindest eine Zugangskontrollvorrichtung eine Parksäule und einen Schrankenbaum (3) umfasst, wobei die Anzeigevorrichtung am Schrankenbaum (3) oder an der Parksäule angebracht oder in den Schrankenbaum (3) oder in die Parksäule integriert ist.

11. Zugangskontrollsystem für Fahrzeuge nach Anspruch 10, **dadurch gekennzeichnet, dass** die Seiten des Schrankenbaums (3) oder der Parksäule, die ankommenden Fahrzeugen in Abhängigkeit der Zugangsrichtung zugewandt sein können, jeweils eine Anzeigevorrichtung aufweisen, wobei anhand der Signale eines Sensors erkannt wird, an welcher Seite der Zugangskontrollvorrichtung sich ein Fahrzeug befindet, um die Anzeigevorrichtung dieser Seite zu aktivieren.

12. Zugangskontrollsystem für Fahrzeuge nach Anspruch 11, **dadurch gekennzeichnet, dass** die Anzeigevorrichtung mehrere LEDs aufweist, die in Abhängigkeit der Aktivierung einzelner LEDs den anzuzeigenden Text darstellen.

## Geänderte Patentansprüche

### Geänderte Patentansprüche gemäss Regel 137(2) EPÜ.

1. Verfahren zur Zugangskontrolle bei einem Zugangskontrollsystem für Fahrzeuge umfassend zumindest eine Zugangskontrollvorrichtung, **dadurch gekennzeichnet, dass** mittels einer einem in Zugangsrichtung ankommenden Fahrzeug zugewandten Anzeigevorrichtung der zumindest einen Zugangskontrollvorrichtung ein eindeutiger, der jeweiligen Zugangskontrollvorrichtung zugeordneter Text angezeigt wird, der durch die Ausführung und/oder Anordnung der Anzeigevorrichtung nur in einem definierten Bereich um die Zugangskontrollvorrichtung sichtbar ist, in dem sich unter normalen Betriebsbedingungen nur ein Fahrzeug befinden kann, wobei der angezeigte Text verwendet wird, um die Zugangskontrollvorrichtung in Abhängigkeit von von einem mobilen elektronischen Gerät (1), in das der Text von einem Benutzer diktiert wird, an das Zugangskontrollsystem übermittelten Daten zu steuern.

2. Verfahren zur Zugangskontrolle nach Anspruch 1, **dadurch gekennzeichnet, dass** der von der Anzeigevorrichtung angezeigte Text in vorgegebenen zeitlichen Abständen geändert wird.

3. Verfahren zur Zugangskontrolle nach Anspruch 1 oder 2, **dadurch gekennzeichnet, dass** von der Anzeigevorrichtung angezeigte Text permanent, in vorgegebenen periodischen Abständen oder nach Detektion eines Fahrzeugs angezeigt wird.

4. Verfahren zur Zugangskontrolle nach Anspruch 1, 2 oder 3, **dadurch gekennzeichnet, dass** der diktierte Text von einer Software im mobilen elektronischen Gerät (1) zu einem Text transkribiert wird, wobei über einen Kommunikationskanal an einen Server (4) des Zugangskontrollsystems Informationen übermittelt werden, welche den transkribierten Text und Identifikationsdaten des Benutzers, umfassend zumindest eine eindeutige ID des Benutzers oder des mobilen elektronischen Gerätes (1), enthalten, wobei anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei ein Sperrorgan (3) der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes (1) der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes (1) ausgelesen oder über eine Software im mobilen elektronischen Gerät (1) an das Zugangskontrollsystem übermittelt wird.

5. Verfahren zur Zugangskontrolle nach Anspruch 1, 2 oder 3, **dadurch gekennzeichnet, dass** der diktierte Text von einer Software im mobilen elektronischen Gerät (1) zu einem Text transkribiert wird, wobei über einen Kommunikationskanal an einen Server (4) des Zugangskontrollsystems Informationen übermittelt werden, welche den transkribierten Text und Identifikationsdaten des Benutzers, umfassend zumindest eine eindeutige ID des Benutzers oder des mobilen elektronischen Gerätes (1), enthalten, wobei anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei beim Einfahren in das vom Zugangskontrollsystem abgedeckte Gebiet anschließend über den Kommunikationskanal vom Server (4) an das mobile elektronische Gerät (1) ein elektronisches Ticket übermittelt wird und ein Sperrorgan (3) der Zugangskontrollvorrichtung, der der transkribierte Text zugeordnet ist, im Öffnungssinne betätigt wird, wobei die Gebühren vor dem Ausfahren mittels einer Software im mobilen elektronischen Gerät und Kreditkartendaten oder an geeigneten Automaten entrichtet werden, wobei im Rahmen des Bezahlvorgangs die ID des Benutzers oder des mobilen elektronischen Gerätes (1) an den Server (4) übermittelt werden, wobei beim Ausfahren anhand der ID des Benutzers oder des mobilen elektronischen Gerätes (1) festgestellt wird, ob die Gebühren entrichtet worden sind, wobei wenn dies der Fall ist, ein Sperrorgan (3) der Zugangskontrollvorrichtung, der der transkribierte Text zugeordnet ist, im Öffnungssinne betätigt wird.

6. Verfahren zur Zugangskontrolle nach Anspruch 1, 2 oder 3, **dadurch gekennzeichnet, dass** die dem diktierten Text entsprechende Audio-Datei und Identifikationsdaten des Benutzers, der das mobile elektronische Gerät (1) bei sich trägt, umfassend zumindest eine eindeutige ID des Benutzers oder des mobilen elektronischen Gerätes (1), über einen Kommunikationskanal und eine Software im mobilen elektronischen Gerät (1) an einen Server (4) des Zugangskontrollsystems übermittelt werden, wobei im Server (4) der diktierte Text zu einem Text transkribiert wird und anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, und ein Sperrorgan (3) der Zugangskontrollvorrichtung, der der transkribierte Text zugeordnet ist, im Öffnungssinne betätigt wird, wenn beim Betreten des vom Zugangskontrollsystem abgedeckten Gebiets anhand der ID des Benutzers oder des mobilen elektronischen Gerätes (1) der Benutzer als registrierter Benutzer identifiziert wird oder wenn anhand der Identifikationsdaten des Benutzers dieser eindeutig identifizierbar ist oder wenn beim Verlassen des vom Zugangskontrollsystem abgedeckten Gebiets die erforderlichen Gebühren entrichtet worden sind, was bei einem registrierten Benutzer durch Belastung seines Kundenkontos oder einer Kreditkarte und bei einem nicht registrierten Benutzer durch Bar- oder Kreditkartenzahlung erfolgt, wobei bei einem registrierten Benutzer die Entrichtung der Gebühren automatisch erfolgt und bei einem nicht registrierten Benutzer bei der Zahlung die ID des Benutzers oder des mobilen elektronischen Gerätes ausgelesen oder über eine Software im mobilen elektronischen Gerät (1), an das Zugangskontrollsystem übermittelt wird.

7. Verfahren zur Zugangskontrolle nach Anspruch 1, 2 oder 3, **dadurch gekennzeichnet, dass** die dem diktierten Text entsprechende Audio-Datei und Identifikationsdaten des Benutzers, der das mobile elektronische Gerät (1) bei sich trägt, umfassend zumindest eine eindeutige ID des Benutzers oder des mobilen elektronischen Gerätes (1), über einen Kommunikationskanal und eine Software im mobilen elektronischen Gerät (1) an einen Server (4) des Zugangskontrollsystems übermittelt werden, wobei im Server (4) der diktierte Text zu einem Text transkribiert wird und anhand des transkribierten Textes die Zugangskontrollvorrichtung identifiziert wird, in deren Zugangsspur sich der Benutzer des mobilen elektronischen Gerätes (1) bzw. die Person, die es bei sich trägt, in einem Fahrzeug direkt vor dem Übergang zwischen dem vom Zugangskontrollsystem abgedeckten Gebiet und dem nicht vom Zugangskontrollsystem abgedeckten Gebiet befindet, wobei beim Einfahren in das vom Zugangskontrollsystem abgedeckte Gebiet anschließend über den Kommunikationskanal vom Server (4) an das mobile elektronische Gerät (1) ein elektronisches Ticket übermittelt wird und ein Sperrorgan (3) der Zugangskontrollvorrichtung, der der transkribierte Text zugeordnet ist, im Öffnungssinne betätigt wird, wobei die Gebühren vor dem Ausfahren mittels einer Software im mobilen elektronischen Gerät und Kreditkartendaten oder an geeigneten Automaten entrichtet werden, wobei im Rahmen des Bezahlvorgangs die ID des Benutzers oder des mobilen elektronischen Gerätes (1) an den Server (4) übermittelt werden, wobei beim Ausfahren anhand der ID des Benutzers oder des mobilen elektronischen Gerätes (1) festgestellt wird, ob die Gebühren entrichtet worden sind, wobei wenn dies der Fall ist, ein Sperrorgan (3) der Zugangskontrollvorrichtung, der der transkribierte Text zugeordnet ist, im Öffnungssinne betätigt wird.

8. Verfahren zur Zugangskontrolle nach Anspruch 4, 5, 6 oder 7, **dadurch gekennzeichnet, dass** mittels des Kommunikationskanals zusätzlich zum transkribierten Text und den Identifikationsdaten des Benutzers auch die GPS-Koordinaten des mobilen elektronischen Gerätes (1) an den Server (4) übermittelt werden, wobei eine Zugangskontrollvorrichtung anhand der Kombination aus GPS-Daten und dem transkribierten Text identifiziert wird.

9. Zugangskontrollsystem für Fahrzeuge umfassend zumindest eine Zugangskontrollvorrichtung, zur Durchführung des Verfahrens nach einem der vorangehenden Ansprüche, **dadurch gekennzeichnet, dass** die zumindest eine Zugangskontrollvorrichtung eine den ankommenden Fahrzeugen zugewandte Anzeigevorrichtung aufweist, mittels der ein eindeutiger, der jeweiligen Zugangskontrollvorrichtung zugeordneter Text anzeigbar ist, der durch die Ausführung und/oder Anordnung der Anzeigevorrichtung nur in einem definierten Bereich um die Zugangskontrollvorrichtung sichtbar ist, in dem sich nur ein Fahrzeug befinden kann, wobei der angezeigte Text verwendbar ist, um die Zugangskontrollvorrichtung in Abhängigkeit von von einem mobilen elektronischen Gerät (1), in das der Text von einem Benutzer diktiert wird, an das Zugangskontrollsystem übermittelten Daten zu steuern.

10. Zugangskontrollsystem für Fahrzeuge nach Anspruch 9, **dadurch gekennzeichnet, dass** die zumindest eine Zugangskontrollvorrichtung eine Parksäule und einen Schrankenbaum (3) umfasst, wobei die Anzeigevorrichtung am Schrankenbaum (3) oder an der Parksäule angebracht oder in den Schrankenbaum (3) oder in die Parksäule integriert ist.

11. Zugangskontrollsystem für Fahrzeuge nach Anspruch 10, **dadurch gekennzeichnet, dass** die Seiten des Schrankenbaums (3) oder der Parksäule, die ankommenden Fahrzeugen in Abhängigkeit der Zugangsrichtung zugewandt sein können, jeweils eine Anzeigevorrichtung aufweisen, wobei anhand der Signale eines Sensors erkannt wird, an welcher Seite der Zugangskontrollvorrichtung sich ein Fahrzeug befindet, um die Anzeigevorrichtung dieser Seite zu aktivieren.

12. Zugangskontrollsystem für Fahrzeuge nach Anspruch 11, **dadurch gekennzeichnet, dass** die Anzeigevorrichtung mehrere LEDs aufweist, die in Abhängigkeit der Aktivierung einzelner LEDs den anzuzeigenden Text darstellen.
